# EUROPEAN PATENT APPLICATION

(11) **EP 4 624 077 A1**
(43) Date of publication of application: **01.10.2025**
(21) Application number: 24166210.5
(22) Date of filing: 26.03.2024
(51) Int. Cl.: B22F 12/70, B22F 10/28, B22F 10/322, B29C 64/153, B29C 64/25, B29C 64/371, B22F 12/00, B33Y 30/00, B33Y 50/02

(54) **BUILD CHAMBER FOR PROVIDING A GAS FLOW IN AN ADDITIVE MANUFACTURING DEVICE AND ADDITIVE MANUFACTURING DEVICE**

(71) Applicant: TRUMPF Laser- und Systemtechnik SE, 71254 Ditzingen (DE); TRUMPF Additive Manufacturing Italia S.r.l., 36015 Schio (VI) (IT)
(72) Inventor: Kaiser, Jakob, 68163 Mannheim (DE); Riva, Fausto, 36010 Zanè (VI) (IT)
(74) Representative: Trumpf Patentabteilung

(57) **Abstract**

Build chamber (5) for providing a gas flow (46a, 46b, 46c, 46d) in an additive manufacturing device (1), wherein the build chamber (5) comprises: a first side wall (51), in which a first inlet channel (36a) is provided, wherein the first inlet channel (36a) is configured to generate a first primary gas flow (46a), which flows horizontally along the bottom of the build chamber (5), a second side wall (52) opposite to the first side wall (51), and an outlet channel (37) for suction of the gas flow (46a, 46b, 46c, 46d), wherein the first side wall (51) comprises an at least partly tilted and/or curved section (51a), and wherein the at least partly tilted and/or curved section (51a) of the first side wall (51) comprises a second inlet channel (36b), which is configured to generate a first secondary gas flow (46b), which substantially flows above the first primary gas flow (46a).

## Description

### Technical Field

The present disclosure generally relates to a build chamber for providing a gas flow in an additive manufacturing device and an additive manufacturing device for the additive production of a three-dimensional component from a powder with a build chamber providing a work surface surrounded by side walls and a top wall, at least one beam source for generating a beam for the irradiation of powder in the work surface for the layer-by-layer production of the component and a gas system for providing a gas flow.

### Background

Manufacturing devices for additively manufacturing a three-dimensional component by applying layers of a building material, preferably a powder, and solidifying it with at least one laser include a build chamber which contains an inert atmosphere, a build cylinder and at least one laser beam generating unit for directing at least one laser beam on the building material. The build cylinder contains a vertically movable substrate plate which is configured to enable applying layers of the building material by gradual lowering and is arranged underneath the build chamber, linked to the build chamber by positioning it at an opening in the hull of the build chamber and provides a build area for building three-dimensional components. To ensure the inert atmosphere inside the build chamber the gas tightness of the build chamber and its adjacent components must be upheld while building the three-dimensional component and gas losses between the individual build processes have to be minimized. The laser beam generating unit includes at least one laser and at least one scanner. To increase the productivity also multiple laser beam generating units can be used. Every laser beam unit has its own characteristics resulting in laser beams with individual characteristics that influence the quality of the build process and finally the build quality of the produced three-dimensional components. For three-dimensional components with good build quality, the laser beam generating units are calibrated individually.

The build cylinder may be exchangeable. The inert atmosphere is ensured by sealing the build chamber before removing the build cylinder, in particular with a lid, and by at least one seal at the interface of the build cylinder and the build chamber. Further, the additive manufacturing device comprises an inlet channel and an outlet channel for providing a gas flow, which flows horizontally along the bottom of the build chamber.

After the build cylinder is positioned at the interface to the build chamber the three-dimensional component is built with procedures that are known as "Selective Laser Sintering" and "Laser Metal Fusion". In these procedures the building material, that is preferably a ceramic powder or metal powder, is exposed to electromagnetic radiation, preferably laser light. The electromagnetic radiation provides sufficient energy and a suitable wavelength for melting or sintering the building material. First, a thin layer of the building material is spread over the substrate plate of the build cylinder with a wiper, roller, brush or blade. Second, after the thin layer is formed, the areas to be solidified are exposed to the electromagnetic radiation and melted or sintered. After the designated material is solidified the substrate plate is lowered and the two steps are repeated until the build of the three-dimensional components is completed. The layers are merged with each other to form three-dimensional components after the build process.

State-of-the-art additive manufacturing machines employ a two-stream gas-flow concept. The primary flow right above the powder bed removes process by-products and prevents oxidation. The secondary flow suppresses the contamination of the process chamber with by-products escaping the primary flow. These would otherwise attenuate the laser beam or contaminate the optics window, deteriorating process results.

However, these concepts by design do not guarantee the suppression of recirculation zones immediately above the powder bed. If the secondary flow enters through a vertical perforated wall, geometric design constraints result in a gap between primary and secondary inlet, in which dead water regions may form, trapping process by-products. If the inlet is formed through local gas-flow components in the ceiling, the secondary flow, first, does not cover the full primary flow. Second, the flow is directed onto the powder bed, resulting in a strong local effect on the primary flow, which complicates the design of a homogeneous primary flow.

Therefore, it is in particular an object of the present disclosure to provide a build chamber for providing a gas flow in an additive manufacturing device and an additive manufacturing device for the additive production of a three-dimensional component from a powder with a build chamber providing a work surface surrounded by side walls and a top wall, at least one beam source for generating a beam for the irradiation of powder in the work surface for the layer-by-layer production of the component and a gas system for providing a gas flow, that improves the suppression of local recirculation zones and that avoids dead-water zones near the process area. Thus, increasing productivity and quality of the produced three-dimensional components.

In general, the present disclosure is directed, at least in part, to improving or overcoming one or more aspects of the prior systems, and in particular to provide an efficient approach for providing a homogeneous gas flow in a build chamber of a manufacturing device for additively producing a three-dimensional component.

### Summary of the disclosure

Some of the objects may be achieved by a build chamber for providing a gas flow in an additive manufacturing device as recited in independent claim 1 as well as by an additive manufacturing device for the additive production of a three-dimensional component from a powder with a build chamber providing a work surface surrounded by side walls and a top wall, at least one beam source for generating a beam for the irradiation of powder in the work surface for the layer-by-layer production of the component and a gas system for providing a gas flow as recited in independent claim 12. Further developments are defined in the dependent claims.

According to a first aspect, the present disclosure is directed to a build chamber for providing a gas flow in an additive manufacturing device, wherein the build chamber comprises: a first side wall, in which a first inlet channel is provided, wherein the first inlet channel is configured to generate a first primary gas flow, which flows horizontally along the bottom of the build chamber, a second side wall opposite to the first side wall, and an outlet channel for suction of the gas flow, wherein the first side wall comprises an at least partly tilted and/or curved section, and wherein the at least partly tilted and/or curved section of the first side wall comprises a second inlet channel, which is configured to generate a first secondary gas flow, which substantially flows above the first primary gas flow. Further, the gas flow may be a shield gas flow by using a shield gas such as argon to prevent oxidation of metallic powder.

This inventive build chamber for providing a gas flow in an additive manufacturing device according to the first aspect provides a system that significantly improves the suppression of local recirculation zones and that avoids dead-water zones near the process area.

Moreover, the first inlet channel may substantially be arranged on the bottom of the first side wall.

Additionally, the second inlet channel may provide the first secondary gas flow substantially through the entire first side wall. According to this, a more homogeneous gas flow can be generated.

Furthermore, the second inlet channel may comprise a first gas flow rectifier such as a filter laminate, perforated plate or honeycomb mesh. Thus, an even more homogeneous gas flow can be generated.

Alternatively or additionally, the outlet channel may substantially be arranged on the bottom of the second side wall.

In some embodiments, the cross-section of the first inlet channel may be smaller than that of the outlet channel. The cross-section of the outlet channel is larger than the cross-section of the first inlet channel, since the outlet channel contains the flow rate of both the primary gas flow and the secondary gas flow. If both the first inlet channel and the outlet channel had the same cross-section, the flow would accelerate depending on the ratio of primary flow rate to secondary flow rate.

Alternatively or additionally, the build chamber may further comprise a third inlet channel, which is configured to generate a second primary gas flow, which flows horizontally along the bottom of the build chamber and in the opposite direction of the first primary gas flow.

According to a further embodiment, the build chamber may further comprise a fourth inlet channel, which is configured to generate a second secondary gas flow, which substantially flows above the first primary gas flow and/or the second primary gas flow, and at least partly in the opposite direction of the first secondary gas flow or rather in a direction mirrored along the center plane of the build chamber, yet both, the first secondary gas flow and the second secondary gas flow, point towards the build area, i.e. the substrate plate.

Moreover, the fourth inlet channel may comprise a second gas flow rectifier such as a filter laminate, perforated plate or honeycomb mesh.

In some embodiments, the outlet channel may be arranged between the first inlet channel and the third inlet channel. Advantageously, the outlet channel may be arranged in a recoating unit of the additive manufacturing device.

Further, the second side wall may comprise an at least partly tilted and/or curved section.

According to a second aspect, the present disclosure is directed to an additive manufacturing device for the additive production of a three-dimensional component from a powder with a build chamber providing a work surface surrounded by side walls and a top wall, at least one beam source for generating a beam for the irradiation of powder in the work surface for the layer-by-layer production of the component and a gas system for providing a gas flow, wherein the build chamber comprises: a first side wall, in which a first inlet channel is provided, wherein the first inlet channel is configured to generate a first primary gas flow, which flows horizontally along the bottom of the build chamber, a second side wall opposite to the first side wall, and an outlet channel for suction of the gas flow, wherein the first side wall comprises an at least partly tilted and/or curved section, and wherein the at least partly tilted and/or curved section of the first side wall comprises a second inlet channel, which is configured to generate a first secondary gas flow, which substantially flows above the first primary gas flow.

This inventive additive manufacturing device for the additive production of a three-dimensional component from a powder with a build chamber providing a work surface surrounded by side walls and a top wall, at least one beam source for generating a beam for the irradiation of powder in the work surface for the layer-by-layer production of the component and a gas system for providing a gas flow according to the second aspect provides an additive manufacturing device that significantly improves the suppression of local recirculation zones and that avoids dead-water zones near the process area.

In some embodiments, the build chamber may further comprise a third inlet channel, which is configured to generate a second primary gas flow, which flows horizontally along the bottom of the build chamber and in the opposite direction of the first primary gas flow.

Alternatively or additionally, the build chamber may further comprise a fourth inlet channel, which is configured to generate a second secondary gas flow, which substantially flows above the first primary gas flow or the second primary gas flow and at least partly in the opposite direction of the first secondary gas flow or rather in a direction mirrored along the center plane of the build chamber, yet both, the first secondary gas flow and the second secondary gas flow, point towards the build area, i.e. the substrate plate.

Furthermore, the second side wall may comprise an at least partly tilted and/or curved section.

Other features and aspects of this disclosure will be apparent from the following description and the accompanying drawings.

### Brief description of the drawings

The accompanying drawings, which are incorporated herein and constitute a part of the specification, illustrate exemplary embodiments of the disclosure and, together with the description, serve to explain the principles of the disclosure. In the drawings:
- Fig. 1: schematically shows an additive manufacturing device for the additive production of a three-dimensional component from a powder with a build chamber,
- Fig. 2: schematically shows a build chamber according to the prior art,
- Fig. 3: schematically shows a build chamber according to a first embodiment of the present invention,
- Fig. 4: schematically shows a build chamber according to a second embodiment of the present invention, and
- Fig. 5: schematically shows a build chamber according to a third embodiment of the present invention.

### Detailed description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many environments and for many different applications. Therefore, the exemplary embodiments are not intended to be, and should not be considered as, a limiting description of the scope of patent protection. Rather, the scope of patent protection shall be defined by the appended claims.

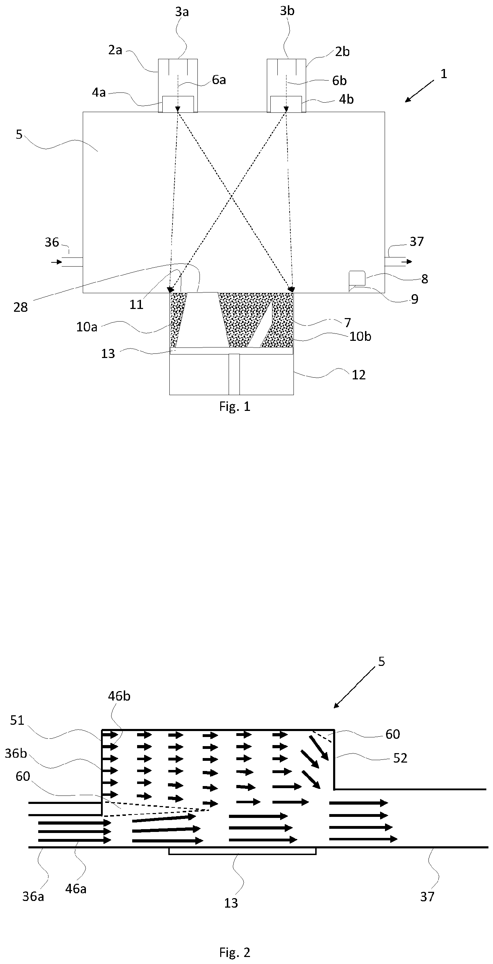

**Fig. 1** schematically shows an additive manufacturing device 1 containing two laser beam generating units 2a, 2b, a build chamber 5 and a build cylinder 12. Laser beam generating units 2a, 2b each comprise a beam source 3a, 3b generating electromagnetic radiation and a scanning unit 4a, 4b, each of which deflects a beam or rather laser beam 6a, 6b. Scanning units 4a, 4b direct laser beams 6a, 6b in a way that leads to laser beams 6a, 6b irradiating a building material 7 in a scan field 28 that lies in an opening 11 at the lower surface of build chamber 5 using their optical components like mirrors and lenses. For example, each scanning unit 4a, 4b may comprise a scanner mirror (not shown) rotatable in two directions or two scanner mirrors (not shown) rotatable in one direction. For example, each scanning unit 4a, 4b may comprise a galvanometer scanner and/or an f-theta lens which is often used at the outlet of laser scanning units 4a, 4b for focusing laser beam 6a, 6b onto a flat image field. Build chamber 5 is designed to provide an enclosed process environment, accesses for laser beam generating units 2a, 2b, accesses for creating a gas flow and opening 11 at its lower surface.

At opening 11 of build chamber 5, build cylinder 12 is placed. Build cylinder 12 contains a movable substrate plate 13, which allows layers of building material 7, in this figure a powder that is fusible with the energy of laser beams 6a, 6b and provided by manufacturing device 1, to be applied by a recoating unit 8 using a recoating lip 9. Recoating lip 9 may be made out of rubber but may also be a blade, wiper or cylinder. After substrate plate 13 is lowered, recoating unit 8 pushes a small pile of building material 7 over scan field 28 resulting in a new layer that can be solidified by laser beams 6a, 6b. According to this, the shown two three-dimensional components 10a, 10b are generated layer by layer inside build cylinder 12.

During the build process, an inert atmosphere is built up and maintained inside build chamber 5 to ensure a good process quality by providing a controlled environment for the melting process. Opening 11 of build chamber 5 is closed with build cylinder 12. Only an inlet channel 36 and an outlet channel 37, which are connected to a gas providing system, create a controlled volume exchange by establishing a continuous protective gas flow inside build chamber 5 to prevent the build-up of smoke and to remove particles and condensates from the atmosphere during the build process to reduce interference with laser beams 6a, 6b. Inlet channel 36 is also used to fill build chamber 5 with an inert, preventive gas to build-up the inert atmosphere. As an example, inlet channel 36 and outlet channel 37 may comprise an inlet valve and an outlet valve to ensure a controlled gas flow and the gas tightness of build chamber 5, if gas flow is shut down. The gas tightness of build chamber 5 may also be ensured by sealings between build cylinder 12 and build chamber 5.

Build cylinder 12 may have an oval or circular base area and a jacket area, but an angular base area in combination with a jacket area is also possible. Build cylinder 12 may also have a rectangular shape.

**Fig. 2** schematically shows a build chamber 5 according to the prior art for providing a gas flow 46a, 46b in an additive manufacturing device 1. Build chamber 5 comprises a vertical arranged first side wall 51, in which a first inlet channel 36a is provided. First inlet channel 36a is configured to generate a first primary gas flow 46a, which flows horizontally along the bottom of build chamber 5. Build chamber 5 further comprises a vertical arranged second side wall 52 opposite to first side wall 51. Further, first side wall 51 comprises a second inlet channel 36b, which is configured to generate a first secondary gas flow 46b, which substantially flows above first primary gas flow 46a. Moreover, build chamber 5 comprises an outlet channel 37 at the bottom of second side wall 52 for suction of gas flows 46a, 46b. As can be seen in Fig. 2, there are so called dead water zones 60, which are quite large. Dead water zones 60 lead to turbulences and inhomogeneity of the gas flow. There is one dead water zone between the two gas flows, e.g. first primary gas flow 46a and first secondary gas flow 46b. A second dead water zone 60 can be seen on the ceiling of the build chamber 5.

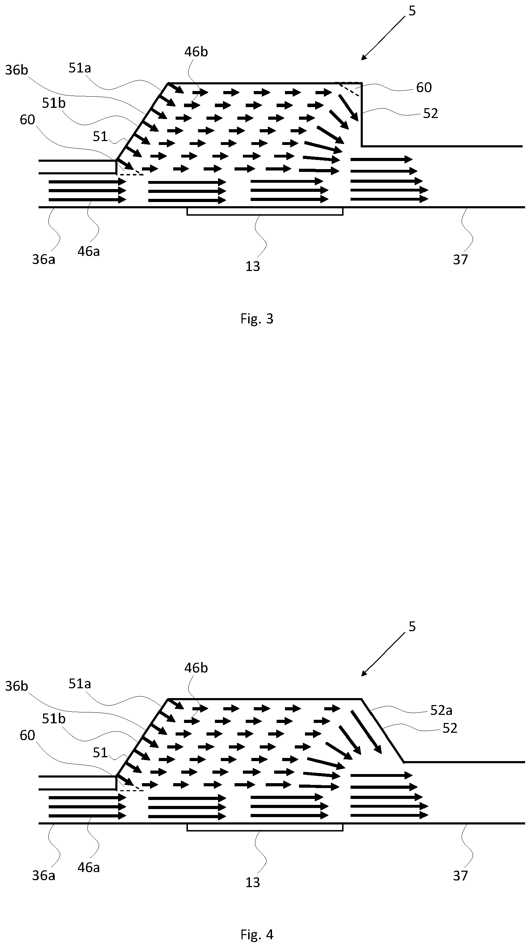

**Fig. 3** schematically shows a build chamber 5 according to a first embodiment of the present invention for providing a gas flow 46a, 46b in an additive manufacturing device 1. The build chamber 5 according to the first embodiment comprises a first side wall 51, in which a first inlet channel 36a is provided. First inlet channel 36a is arranged on the bottom of the first side wall 51 and is configured to generate a first primary gas flow 46a, which flows horizontally along the bottom of build chamber 5. Moreover, build chamber 5 according to the first embodiment comprises a vertical arranged second side wall 52 opposite to first side wall 51. First side wall 51 comprises an at least partly tilted and/or curved section 51a. Further, the at least partly tilted and/or curved section 51a of first side wall 51 comprises a second inlet channel 36b, which is configured to generate a first secondary gas flow 46b, which substantially flows above first primary gas flow 46a. Second inlet channel 36b provides the first secondary gas flow 46b substantially through the entire first side wall 51. Further, second inlet channel 36b comprises a first gas flow rectifier 51b such as a filter laminate, perforated plate or honeycomb mesh. Moreover, build chamber 5 comprises an outlet channel 37 for suction of gas flows 46a, 46b. The cross-section of first inlet channel 36a is smaller than that of the outlet channel 37. As can be seen in Fig. 3, due to the at least partly tilted and/or curved section 51a of first side wall 51, the respective dead water zone 60 can be reduced.

**Fig. 4** schematically shows a build chamber 5 according to a second embodiment of the present invention for providing a gas flow 46a, 46b in an additive manufacturing device 1. The build chamber 5 according to the second embodiment comprises a first side wall 51, in which a first inlet channel 36a is provided. First inlet channel 36a is arranged on the bottom of the first side wall 51 and is configured to generate a first primary gas flow 46a, which flows horizontally along the bottom of build chamber 5. Moreover, build chamber 5 according to the second embodiment comprises a second side wall 52 opposite to first side wall 51. Second side wall 52 comprises an at least partly tilted and/or curved section 52a. First side wall 51 comprises an at least partly tilted and/or curved section 51a. Further, the at least partly tilted and/or curved section 51a of first side wall 51 comprises a second inlet channel 36b, which is configured to generate a first secondary gas flow 46b, which substantially flows above first primary gas flow 46a. Second inlet channel 36b provides the first secondary gas flow 46b substantially through the entire first side wall 51. Further, second inlet channel 36b comprises a first gas flow rectifier 51b such as a filter laminate, perforated plate or honeycomb mesh. Moreover, build chamber 5 comprises an outlet channel 37 for suction of gas flows 46a, 46b. The cross-section of first inlet channel 36a is smaller than that of the outlet channel 37. As can be seen in Fig. 4, due to the at least partly tilted and/or curved section 51a of second side wall 52, the respective dead water zone 60 can be eliminated.

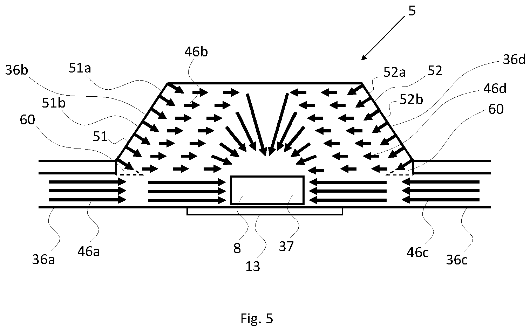

**Fig. 5** schematically shows a build chamber 5 according to a third embodiment of the present invention for providing a gas flow 46a, 46b, 46c, 46d in an additive manufacturing device 1. The build chamber 5 according to the third embodiment comprises a first side wall 51, in which a first inlet channel 36a is provided. First inlet channel 36a is arranged on the bottom of the first side wall 51 and is configured to generate a first primary gas flow 46a, which flows horizontally along the bottom of build chamber 5. Moreover, build chamber 5 according to the third embodiment comprises a second side wall 52 opposite to first side wall 51. Second side wall 52 comprises an at least partly tilted and/or curved section 52a. First side wall 51 comprises an at least partly tilted and/or curved section 51a. Further, the at least partly tilted and/or curved section 51a of first side wall 51 comprises a second inlet channel 36b, which is configured to generate a first secondary gas flow 46b, which substantially flows above first primary gas flow 46a. Second inlet channel 36b provides the first secondary gas flow 46b substantially through the entire first side wall 51. Further, second inlet channel 36b comprises a first gas flow rectifier 51b such as a filter laminate, perforated plate or honeycomb mesh. Moreover, build chamber 5 comprises a third inlet channel 36c, which is arranged on the bottom of the second side wall 52 and which is configured to generate a second primary gas flow 46c, which flows horizontally along the bottom of build chamber 5 and in the opposite direction of first primary gas flow 46a. Build chamber 5 further comprises a fourth inlet channel 36d, which is arranged in the second side wall 52 and which is configured to generate a second secondary gas flow 46d, which substantially flows above the first primary gas flow 46a and/or the second primary gas flow 46c, and at least partly in the opposite direction of the first secondary gas flow 46b. Fourth inlet channel 36d comprises a second gas flow rectifier 52b such as a filter laminate, perforated plate or honeycomb mesh. Moreover, build chamber 5 comprises an outlet channel 37 for suction of gas flows 46a, 46b, 46c, 46d. In the third embodiment, outlet channel 37 is arranged in recoating unit 8. As can be seen in Fig. 5, due to the at least partly tilted and/or curved section 52a of second side wall 52, the respective dead water zones 60 can also be reduced.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

Although the preferred embodiments of this invention have been described herein, improvements and modifications may be incorporated without departing from the scope of the following claims.

### List of reference signs

- 1: additive manufacturing device
- 2a, 2b: laser beam generating unit
- 3a, 3b: beam source
- 4a, 4b: scanning unit
- 5: build chamber
- 6a, 6b: beam
- 7: building material/ powder
- 8: recoating unit
- 9: recoating lip
- 10a, 10b: three-dimensional component
- 11: opening
- 12: build cylinder
- 13: substrate plate
- 36: inlet channel
- 36a: first inlet channel
- 36b: second inlet channel
- 36c: third inlet channel
- 36d: fourth inlet channel
- 37: outlet channel
- 46a: first primary gas flow
- 46b: first secondary gas flow
- 46c: second primary gas flow
- 46d: second secondary gas flow
- 51: first side wall
- 51a: at least partly tilted and/or curved section of first side wall
- 51b: first gas flow rectifier
- 52: second side wall
- 52a: at least partly tilted and/or curved section of second side wall
- 52b: second gas flow rectifier
- 60: dead water zone

## Claims

1. Build chamber (5) for providing a gas flow (46a, 46b, 46c, 46d) in an additive manufacturing device (1), wherein the build chamber (5) comprises:
- a first side wall (51), in which a first inlet channel (36a) is provided, wherein the first inlet channel (36a) is configured to generate a first primary gas flow (46a), which flows horizontally along the bottom of the build chamber (5),
- a second side wall (52) opposite to the first side wall (51), and
- an outlet channel (37) for suction of the gas flow (46a, 46b, 46c, 46d),
- wherein the first side wall (51) comprises an at least partly tilted and/or curved section (51a), and
- wherein the at least partly tilted and/or curved section (51a) of the first side wall (51) comprises a second inlet channel (36b), which is configured to generate a first secondary gas flow (46b), which substantially flows above the first primary gas flow (46a).

2. Build chamber (5) according to claim 1, wherein the first inlet channel (36a) is substantially arranged on the bottom of the first side wall (51).

3. Build chamber (5) according to claim 1 or 2, wherein the second inlet channel (36b) provides the first secondary gas flow (46b) substantially through the entire first side wall (51).

4. Build chamber (5) according to any of claims 1 to 3, wherein the second inlet channel (36b) comprises a first gas flow rectifier (51b) such as a filter laminate, perforated plate or honeycomb mesh.

5. Build chamber (5) according to any of claims 1 to 4, wherein the outlet channel (37) is substantially arranged on the bottom of the second side wall (52).

6. Build chamber (5) according to any of claims 1 to 5, wherein the cross-section of the first inlet channel (36a) is smaller than that of the outlet channel (37).

7. Build chamber (5) according to any of claims 1 to 4, wherein the build chamber (5) further comprises a third inlet channel (36c), which is configured to generate a second primary gas flow (46c), which flows horizontally along the bottom of the build chamber (5) and in the opposite direction of the first primary gas flow (46a).

8. Build chamber (5) according to any of claims 1 to 4 or 7, wherein the build chamber (5) further comprises a fourth inlet channel (36d), which is configured to generate a second secondary gas flow (46d), which substantially flows above the first primary gas flow (46a) and/or the second primary gas flow (46c), and at least partly in the opposite direction of the first secondary gas flow(46b).

9. Build chamber (5) according to claim 8, wherein the fourth inlet channel (36d) comprises a second gas flow rectifier (52b) such as a filter laminate, perforated plate or honeycomb mesh.

10. Build chamber (5) according to any of claims 7 to 9, wherein the outlet channel (37) is arranged between the first inlet channel (36a) and the third inlet channel (36c).

11. Build chamber (5) according to any of claims 1 to 10, wherein the second side wall (52) comprises an at least partly tilted and/or curved section (52a).

12. Additive manufacturing device (1) for the additive production of a three-dimensional component (10a, 10b) from a powder (7) with a build chamber (5) providing a work surface surrounded by side walls and a top wall, at least one beam source (3a, 3b) for generating a beam (6a, 6b) for the irradiation of powder (7) in the work surface for the layer-by-layer production of the component (10a, 10b) and a gas system for providing a gas flow (46a, 46b, 46c, 46d), wherein the build chamber (5) comprises:
- a first side wall (51), in which a first inlet channel (36a) is provided, wherein the first inlet channel (36a) is configured to generate a first primary gas flow (46a), which flows horizontally along the bottom of the build chamber (5),
- a second side wall (52) opposite to the first side wall (51), and
- an outlet channel (37) for suction of the gas flow (46a, 46b, 46c, 46d),
- wherein the first side wall (51) comprises an at least partly tilted and/or curved section (51a), and
- wherein the at least partly tilted and/or curved section (51a) of the first side wall (51) comprises a second inlet channel (36b), which is configured to generate a first secondary gas flow (46b), which substantially flows above the first primary gas flow (46a).

13. Additive manufacturing device (1) according to claim 12, wherein the build chamber (5) further comprises a third inlet channel (36c), which is configured to generate a second primary gas flow (46c), which flows horizontally along the bottom of the build chamber (5) and in the opposite direction of the first primary gas flow (46a).

14. Additive manufacturing device (1) according to claim 12 or 13, wherein the build chamber (5) further comprises a fourth inlet channel (36d), which is configured to generate a second secondary gas flow (46d), which substantially flows above the first primary gas flow (46a) and/or the second primary gas flow (46c), and at least partly in the opposite direction of the first secondary gas flow(46b).

15. Additive manufacturing device (1) according to any of claims 12 to 14, wherein the second side wall (52) comprises an at least partly tilted and/or curved section (52a).
